# FASCICULE DE BREVET EUROPEEN

(11) **EP 2 771 254 B1**
(45) Date de publication et mention de la délivrance du brevet: **16.09.2015**
(21) Numéro de dépôt: 12795621.7
(22) Date de dépôt: 21.10.2012
(51) Int. Cl.: B65D 77/06, B65D 88/16

(54) **DISPOSITIF DE STABILISATION DE VALVES DE VIDANGE ET/OU REMPLISSAGE D'UN CONTENEUR SOUPLE DESTINÉ AU TRANSPORT DE LIQUIDES OU DE MATIÈRES PULVÉRULENTES**
VORRICHTUNG ZUR STABILISIERUNG VON AUSLASS- UND/ODER ABFÜLLVENTILEN FÜR EINEN FLEXIBLEN BEHÄLTER ZUM TRANSPORT VON FLÜSSIGKEITEN ODER PULVERFÖRMIGEN GÜTERN
DEVICE FOR THE STABILISATION OF DRAIN AND/OR FILL VALVES FOR A FLEXIBLE CONTAINER INTENDED FOR THE TRANSPORTATION OF LIQUIDS OR PULVERULENT MATERIALS

(30) Priorité: 28.10.2011 CH 17402011
(43) Date de publication de la demande: 03.09.2014
(73) Titulaire: Codefine S. A., 1005 Lausanne (CH)
(72) Inventeur: SCHINASI, Piero, CH-1066 Epalinges (CH); LEVY, Stéphane, CH-1005 Lausanne (CH)
(74) Mandataire: Hanson, William Bennett
(86) Numéro de dépôt international: PCT/IB2012/055783
(87) Numéro de publication internationale: WO 2013/061230

(56) Documents cités:
- WO-A1-2010/150160
- WO-A1-2011/054356
- GB-A- 2 188 305
- US-A- 4 934 654
- US-A1- 2006 078 234
- US-B1- 6 962 321

## Description

La présente invention concerne un dispositif de stabilisation de valves de vidange et/ou remplissage d'un conteneur souple destiné au transport de liquides ou de matières pulvérulentes.

Le transport de matières liquides, par exemple de concentré de jus de fruits, ou de matières pulvérulentes, est traditionnellement exécuté au moyen de conteneurs rigides tels que des cuves métalliques ou en matière plastique.

Deux inconvénients principaux frappent de ce mode de transport, en premier lieu l'encombrement occasionné par les cuves lorsqu'il faut les transporter vide avant ou après convoyage du liquide, et en second lieu le poids en ce qui concerne plus particulièrement les cuves métalliques.

Des propositions ont donc vu le jour pour remédier à ces inconvénients, mettant en jeu des enveloppes souples adaptées au transport de liquides, des liners, pouvant être placés soit dans des conteneurs rigides amovibles, soit dans les conteneurs souples eux-aussi, des enveloppes de toile tissée pour l'essentiel.

L'enveloppe souple associée à un conteneur souple est bien sûr la solution la plus radicale et la plus performante en ce qui concerne la réduction du poids et de l'encombrement à vide. Elle est aussi économiquement la plus avantageuse.

Cependant, l'association enveloppe souple et conteneur souple présente un handicap par rapport aux solutions à cuve ou aux solutions à conteneur rigide.

En effet, lors du remplissage ou de la vidange, il est nécessaire de solidariser la valve au conduit de vidange ou remplissage, ce qui implique un mouvement de vissage du conduit de l'installation sur le corps de la valve. Les conteneurs rigides permettent de solidariser fermement la valve au conteneur et donc d'assurer une position fixe et invariable de la valve même et surtout lorsqu'elle est sollicitée par une manoeuvre de vissage. Le problème serait exactement le même avec une fixation à baïonnette

En revanche, le conteneur souple ne permet pas une fixation engendrant une position fixe et invariable de la valve. L'opération indispensable consistant à associer ou à désolidariser la valve et le conduit de vidange et/ou remplissage est donc périlleuse car l'enveloppe interne supporte très mal les torsions et enroulements et risque de se rompre par déchirement.

WO 2010/150160 A1 décrit l'insert d'une plaque entre les parois d'un conteneur qui permet à la valve de tourner dans la plaque, ladite plaque n'étant pas fixée au conteneur.

US 4 934 654 A décrit une enveloppe intérieure souple contenue dans un carton et la stabilisation d'une valve au carton grâce à une ouverture dans le carton comportant des rainures.

GB 2 188 305 A et WO 2011/054356 A1 décrivent une enveloppe intérieure souple dans un carton avec moyen de fixation d'une valve au carton permettant à la valve de tourner dans ledit moyen.

La présente invention a pour but d'atténuer dans une mesure convaincante et industriellement sure l'essentiel des inconvénients qui viennent d'être mentionnés.

A cette fin, l'invention prévoit un ensemble comprenant un conteneur souple destiné au transport de liquides ou de matières pulvérulentes, et une valve de vidange at/ou remplissage dudit conteneur, selon la revendication 1. Pour décrire grossièrement la présente invention dans son principe, on peut dire qu'il s'agit de la combinaison de deux éléments intellectuellement distincts dont aucun n'apporte sans l'autre l'effet recherché.

Le premier élément relève du choix de la valve, ou de la famille de valves, qu'il convient de privilégier. Le second élément, à la fois dépendant et inspirateur du premier, consiste à apporter des aménagements constructifs nouveaux tirant profit des caractéristiques choisies du premier élément.

Toutes les valves utilisables dans ce contexte précis présentent un corps cylindrique muni d'un filetage, en général extérieur. Cette caractéristique est dictée par la nécessité de pouvoir l'accoupler au conduit de vidange et/ou remplissage. Ces valves comportent aussi une collerette destinée à solidariser la valve et l'enveloppe interne contenant le liquide.

On retiendra en premier lieu des valves dont la clé d'obturation-ouverture traverse de part en part le corps cylindrique de la valve, soit en extrémité libre, soit en extrémité cachée dans un culot borgne. La particularité de telles valves est de comporter en position basse un ergot, parfaitement solidaire en rotation du corps.

On retiendra en second lieu des valves dont la collerette, rigide en sa partie centrale, comporte une encolure polygonale, par exemple en carré.

Enfin on peut conformer à dessein une valve présentant sur son corps dans la zone proche de la collerette, de préférence en position basse, une protubérance. Cette protubérance se présente idéalement en un trapèze dont la base la plus large est à l'opposé du corps de la valve.

Venant maintenant aux aménagements constructifs précités, on peut préciser qu'ils se composent d'une part d'une plaque de stabilisation comportant une découpe qui épouse en partie le corps de la valve et épouse plus spécifiquement la prise offerte par l'ergot formé par la clé, respectivement la protubérance trapézoïdale ou encore le contour polygonal de la collerette médiane.

D'autre part, ces aménagements consistent aussi dans le positionnement, sur la surface externe du conteneur souple et sur la surface proximale de la plaque, de paires d'organes d'accrochage amovibles constitués de tapis de boucles et de crochets coopérant entre eux par paire. Les tapis cousus ou collés sur le conteneur souple étant positionnés en regard de ceux collés sur la face proximale de la plaque.

Après cette présentation générale, on décrit ci-après les particularités du dispositif selon l'invention, en illustrant quelques variantes et en se référant au dessin dans lequel :
La figure 1 est une vue en perspective d'une première valve impliquée dans le dispositif selon l'invention,
La figure 2 est une vue en perspective d'une deuxième valve impliquée dans le dispositif selon l'invention,
La figure 3 est une vue en perspective d'une troisième valve impliquée dans le dispositif selon l'invention,
Les figures 4, 5 et 6, illustrent toutes trois une vue en perspective d'une plaque de stabilisation selon l'invention, plaque respectivement destinée à collaborer chacune avec la valve spécifique représentée dans l'ordre aux figures 1, 2 et 3.
La figure 7 montre en perspective les différents éléments composant le dispositif selon l'invention.

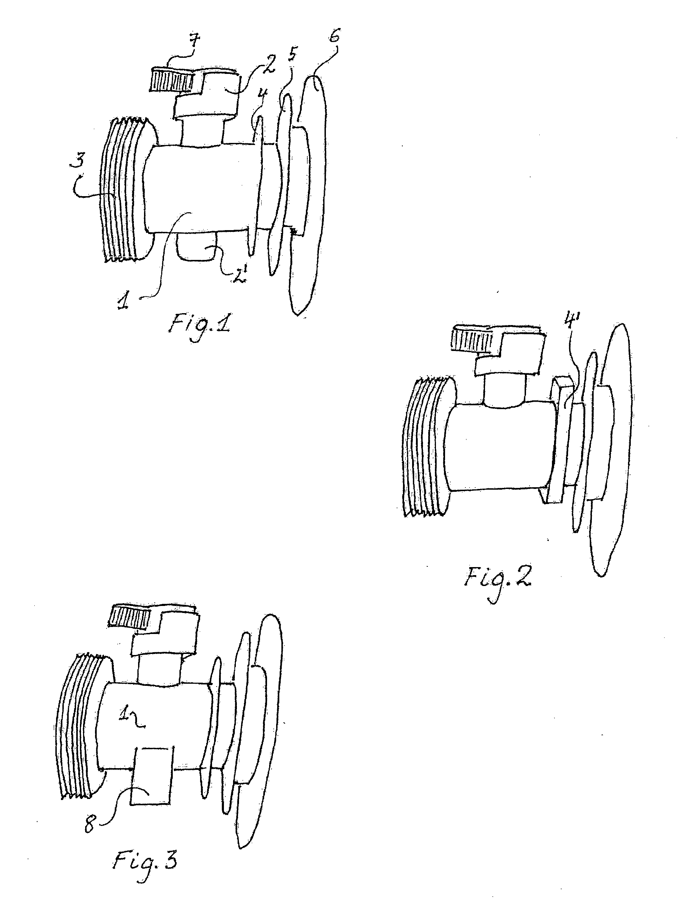

Sur la figure 1 on reconnaît le corps 1 de la valve, traversé de part en part par la clé 2. On distingue aussi le filetage 3 qui permettra le vissage d'un conduit externe destiné à la vidange ou au remplissage du conteneur. On distingue aussi diverses collerettes 4, 5 et 6, intervenant, pour les deux dernières, dans la fixation de la valve à l'enveloppe destinée à contenir le liquide.

On remarque que, à l'opposé du levier de commande 7 de la clé de valve, la partie basse de la clé 2' représente un ergot, totalement solidaire en rotation du corps de la valve.

Sur la figure 2, on retrouve les mêmes éléments que sur la figure 1 et ils ne sont pas détaillés une deuxième fois. En revanche l'attention est attirée sur le fait que la première collerette 4' a cette fois davantage d'épaisseur que précédemment et surtout qu'elle est de forme carrée.

Sur la figure 3, on retrouve les mêmes éléments que sur la figure 1, mais on note, en partie basse du corps de valve 1 une protubérance additionnelle 8 , vue ici de profil, mais traduisant de face une base sensiblement trapézoïdale.

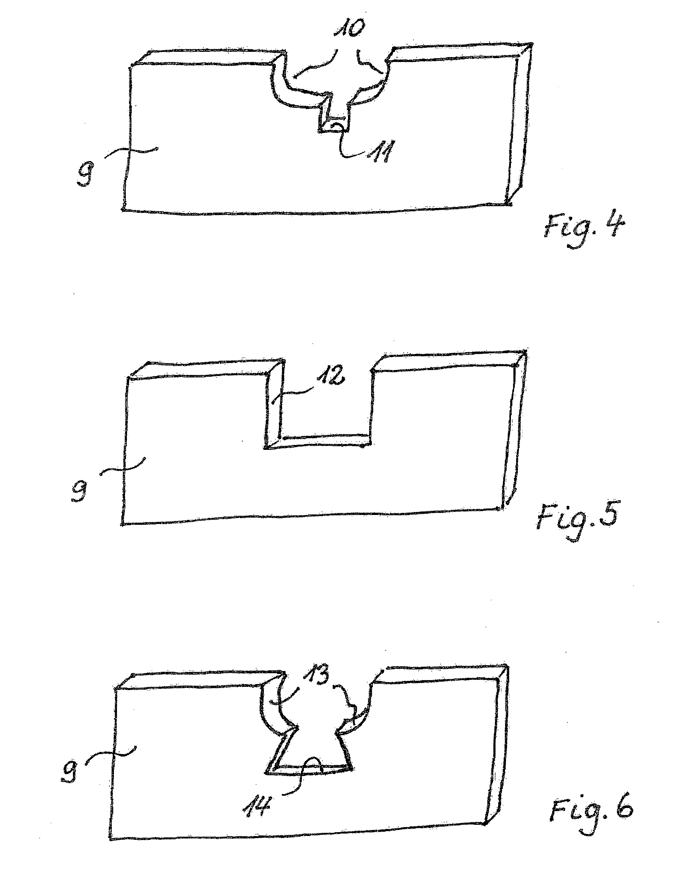

Sur la figure 4, on distingue la plaque de stabilisation 9, qui comporte une découpe dont la partie principale 10 est conformée pour épouser le corps cylindrique de la valve alors que la découpe additionnelle 11 accueille, en épousant aussi sa forme, l'ergot 2' représenté par le dépassement inférieur de la clé de valve tel qu'on peut le voir à la figure 1.

La plaque est préférablement réalisée en polypropylène alvéolaire (nid d'abeille) pour les propriétés de rigidité, de solidité et de légèreté de cette matière.

Sur la figure 5, on observe que la découpe pratiquée dans la plaque de stabilisation 9 est de forme globalement carrée et qu'elle épouse la forme carrée de la première collerette 4' qu'on peut voir à la figure 2

Sur la figure 6, on observe que la plaque de stabilisation 9 a, comme c'était déjà le cas à la figure 4, une découpe en deux parties, la première 13 étant globalement circulaire et épousant le corps cylindrique de la valve alors que la deuxième partie 14 est conformée en trapèze et collabore avec la protubérance trapézoïdale 8 visible de profil sur la figure 3.

Sur le plan du langage, on a préféré parler de plaque de stabilisation plutôt que de plaque de fixation, ceci pour traduire le fait que ce qu'il s'agit de combattre est une mise en rotation de la valve selon son axe lors du vissage ou dévissage du conduit de remplissage ou vidange. Mais il ne s'agit pas de priver la valve de toute liberté relativement à d'autres faibles mouvements qui doivent être tolérés et permis par le dispositif. D'autre part, il ne faut pas perdre de vue que l'enveloppe externe constituant le conteneur souple est en toile tissée (en polypropylène par exemple) ce qui relativise de toute façon la notion de rigidité d'un tel assemblage.

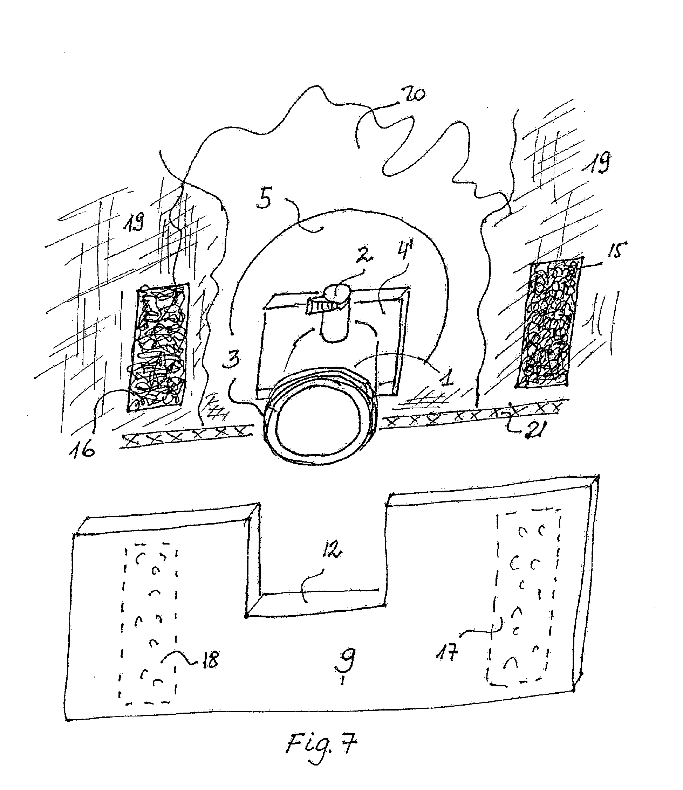

Sur la figure 7, on a représenté partiellement l'enveloppe intérieure, ou liner, 20, qui est destinée à contenir le liquide.

Le conteneur souple 19 est également présente en partie uniquement, le long de l'une des arêtes inférieures assemblant par une couture 21 une paroi verticale avec le fond du grand sac que forme le conteneur souple. La face face verticale du conteneur souple comporte une découpe à rabat qui laisse apparaître la valve.

On a choisi pour cette dernière figure une valve telle que représentée à la figure 2, comportant un corps cylindrique 1, un filetage 3, une clé de valve 2 ez enfin une collerette proximale carrée 4'.

On remarque que la face verticale du conteneur souple comporte deux bandes de tapis de boucles et crochets 15 et 16, qui sont cousues et/ou collées sur la face externe de la toile 19 du conteneur souple.

Ces deux tapis de boucles et crochets 15 et 16 sont placés en regard de deux tapis de boucles et crochets 18 et 19, figurés en traits discontinus sur le dessin, qui sont collés sur la face proximale (par rapport à la valve) de la plaque de stabilisation 9.

Enfin, la plaque de stabilisation 9 correspond à celle illustrée à la figure 5 et comporte donc une découpe carrée 12.

A ce stade de la description, on comprend aisément que la découpe 12 de la plaque emprisonne la collerette carrée 4' et qu'une fois les tapis de boucles et crochets mis en coopération par paire, on peut visser et dévisser à loisir des conduits sur la valve, celle-ci ne tournera pas sur son axe. Et c'est exactement ce que l'on recherchait.

## Revendications

1. Ensemble comprenant un conteneur souple (19) destiné au transport de liquides ou de matières pulvérulentes, et une valve de vidange et/ou remplissage dudit conteneur, **caractérisé par le fait que** la valve comporte au moins un organe parmi les trois suivants, soit un ergot (2') en position basse formé par le dépassement d'une clé de valve traversante (2), soit une collerette proximale polygonale (41), soit une protubérance partiellement polygonale (8), et en ce que l'ensemble comprend une plaque de stabilisation (9) possèdant à la fois une découpe (11, 12, 14) correspondant et épousant le contour de l'au moins un organe précité, et deux tapis de boucles et crochets (17, 18) collés sur sa face proximale et destinés à coopérer avec des tapis de boucles et crochets (15, 16) cousus et/ou collés sur la surface extérieure du conteneur souple (19), en regard avec les premiers tapis précités, l'ensemble ainsi constitué et assemblé interdisant à la valve de tourner sur elle-même lors du vissage ou dévissage d'un conduit de vidange et/ou remplissage sur la valve.

2. Ensemble selon la revendication 1, **caractérisé par le fait que** la collerette (12) choisie est de forme carrée.

3. Ensemble selon la revendication 1, **caractérisé par le fait que** la protubérance polygonale (8) choisie est au moins partiellement trapézoïdale.

4. Ensemble selon l'une des revendications précédentes, **caractérisé par le fait que** la plaque de stabilisation (9) est réalisée en polypropylène alvéolaire.

## Patentansprüche

1. Einheit, die einen flexiblen Behälter (19) für den Transport von Flüssigkeiten oder von pulverförmigen Materialien und ein Auslass- und/oder Füllventil des Behälters umfasst, **dadurch gekennzeichnet, dass** das Ventil mindestens eines der drei folgenden Organe, entweder einen Sporn (2') in unterer Position, gebildet durch den Überstand eines durchgängigen Ventilschlüssels (2), oder einen polygonalen proximale Kragen (4), oder einen teilweise polygonalen Vorsprung (8), aufweist, und dass die Einheit eine Stabilisierungsplatte (9) umfasst, die sowohl einen entsprechenden Ausschnitt (11, 12, 14) mit der Kontur von mindestens einem vorgenannten Organ als auch zwei Matten mit Schlaufen und Haken (17, 18), die auf ihrer proximalen Seiten geklebt sind und zur Zusammenarbeit mit Matten mit Schlaufen und Haken (15, 16), die gegenüber den ersten genannten Matten auf der Außenfläche des flexiblen Behälters (19) genäht und/oder geklebt sind, besitzt, wobei die derart gebildete und montierte Einheit verhindert, dass sich das Ventil beim Auf- oder Abschrauben einer Auslass- und/oder Füllleitung auf das Ventil um sich selbst dreht.

2. Einheit nach Anspruch 1, **dadurch gekennzeichnet, dass** der gewählte Kragen (12) quadratischer Form ist.

3. Einheit nach Anspruch 1, **dadurch gekennzeichnet, dass** der gewählte polygonale Vorsprung (8) mindestens teilweise trapezförmig ist.

4. Einheit nach einem der vorangehenden Ansprüche, **dadurch gekennzeichnet, dass** die Stabilisierungsplatte (9) aus zellulärem Polyprophylen hergestellt ist.

## Claims

1. An assembly comprising a flexible container (19) for conveying liquids or pulverulent materials, and a drain and/or fill valve of said container, **characterised in that** the valve comprises at least one of the following three members: a lug (2') in a low position formed by an extension of a through valve key (2), a polygonal proximal flange (4') or a partially polygonal protuberance (8), and **in that** the assembly comprises a stabilising plate (9) having both a recess (11, 12, 14) corresponding to and following the shape of the said at least one member, and two pads (17, 18) of loops and hooks stuck to the proximal surface and intended to co-operate with pads (15, 16) of loops and hooks sewn and/or stuck to the outer surface of the flexible container (19) opposite the said first pads, the assembly, when assembled, preventing the valve from rotating on itself when a drain pipe and/or fill pipe is screwed to or unscrewed from the valve.

2. An assembly according to claim 1, **characterised in that** the chosen flange (12) is square.

3. An assembly according to claim 1, **characterised in that** the chosen polygonal protuberance (8) is at least partly trapezoidal.

4. An assembly according to any of the preceding claims, **characterised in that** the stabilising plate (9) is made of cellular polypropylene.
